# EUROPÄISCHE PATENTANMELDUNG

(11) **EP 0 680 232 A2**
(43) Veröffentlichungstag der Anmeldung: **02.11.1995**
(21) Anmeldenummer: 95103393.5
(22) Anmeldetag: 09.03.1995
(51) Int. Cl.: H04Q 9/00, H04L 12/44, G06F 3/06

(54) **Verfahren zur Konfiguration eines Informationsdatennetzes**

(30) Priorität: 10.03.1994 DE 4407895
(71) Anmelder: REKO electronic GmbH, D-97828 Marktheidenfeld (DE)
(72) Erfinder: Kern, Michael, D-97855 Homburg (DE); Hock, Thomas, D-97292 Wüstenzell (DE); Farrenkopf, Christoph, D-97839 Esselbach (DE); Schüll, Ekkehard, D-97840 Hafenlohr (DE)
(74) Vertreter: Jochem, Bernd, Dipl.-Wirtsch.-Ing.

(57) **Zusammenfassung**

Das Verfahren dient zur Konfiguration eines Informationsdatennetzes (10) mit einem Zentralrechner (12) und einer Vielzahl von Netzknoten (16), die zur Ansteuerung elektrischer Verbraucher oder zum Empfang von Meßsignalen dienen. Bisher mußte hierzu in jedem Netzknoten eine Auslösetaste betätigt werden. Um dies zu vermeiden, werden die Netzknoten (16) in einer im Rechner (12) hinterlegten Reihenfolge einzeln nacheinander für die Adressvergabe aktiviert, wobei der erste Netzknoten (16) direkt vom Rechner aus aktiviert wird und jeder Netzknoten nach seiner Adresszuteilung den hinter ihn geschalteten Netzknoten aktiviert.

## Beschreibung

Die Erfindung befaßt sich mit einem Verfahren zur Konfiguration eines Informationsdatennetzes in Form eines Bussystems zur Steuerung elektrischer Einrichtungen in Gebäuden mit einem Zentralrechner, einer Schnittstelle und einer Vielzahl von Netzknoten, die jeweils eine Steuerelektronik zur Ansteuerung elektrischer Verbraucher oder zum Empfang von Meßsignalen besitzen, wobei die Netzknoten in festgelegter Reihenfolge hintereinander gekoppelt werden.

Solche Informationsdatennetze zur Steuerung der elektrischen Einrichtung in Gebäuden müssen vor der ersten Inbetriebnahme konfiguriert werden. Dabei bekommt jeder Netzknoten eine Adressbezeichnung zugeteilt, die im Netzknoten gespeichert wird und unter der der betreffende Netzknoten vom Zentralrechner aus ansteuerbar ist.

Bisher ging man dabei so vor, daß eine Person an dem zu adressierenden Netzknoten eine Lerntaste betätigte, worauf sich dieser Netzknoten mit dem Rechner in Verbindung setzte. Gleichzeitig mußte einer zweiten Person am Rechner mitgeteilt werden, an welchem Netzknoten die Lerntaste gedrückt wurde, damit diese zweite Person dem aktuellen Netzknoten eine logische Adressierung zuteilen konnte (z. B. Licht - Küche).

Diese Prozedur der Initialisierung mußte nacheinander an allen über das Gebäude verteilten Netzknoten durchgeführt werden.

Das bekannte Verfahren ist mit einem hohen Arbeits- und Zeitaufwand verbunden, zumal die Netzknoten oft schwer zugänglich angebracht sind und ein Sprechkontakt der beiden Personen notwendig ist, was beispielsweise in Hochhäusern nur über Funkverbindungen möglich ist.

Aufgabe der Erfindung ist es, ein Verfahren der oben beschriebenen Art zu schaffen, das von einer einzigen Person vom Zentralrechner aus durchgeführt werden kann.

Die Aufgabe wird erfindungsgemäß dadurch gelöst, daß die folgenden Verfahrensschritte ausgeführt werden:
a) vor Beginn der Konfigurierung werden die Adressbezeichnungen entsprechend der in Reihe gekoppelten Netzknoten für die Adressvergabe im Rechner hinterlegt;
b) die Netzknoten werden in ihrer Reihenfolge einzeln nacheinander in der Weise aktiviert, daß sie dem Rechner eine vorhandene Knotenkennung mitteilen, wobei
   I. der erste Netzknoten direkt vom Rechner aus aktiviert und ihm die erste Adressbezeichnung der hinterlegten Reihenfolge zugeteilt wird;
   II. jeder Netzknoten nach seiner Adresszuteilung den hinter ihn geschalteten Netzknoten zur Mitteilung seiner Knotenkennung an den Rechner aktiviert und ihm daraufhin die jeweils nächste Adressbezeichnung der hinterlegten Reihenfolge zugeteilt wird.

Dieses Verfahren bietet den Vorteil, daß eine einzige Person in einem Zug alle Adressbezeichnungen eingeben kann und anschließend nach dem Starten am Rechner die Konfiguration des Datennetzes mit der Adressvergabe an alle Netzknoten automatisch abläuft. Die Aktivierung des nachfolgenden Netzknotens in Schritt II kann entweder durch Erzeugen eines Aktivierungssignals im betreffenden Netzknoten oder durch Weiterin Schritt II kann entweder durch Erzeugen eines Aktivierungssignals im betreffenden Netzknoten oder durch Weiterschalten des vom Rechner erzeugten Aktivierungssignal erfolgen. Dieses Verfahren ist um ein Vielfaches schneller als das bisherige manuelle Betätigen der Lerntasten an jedem einzelnen Netzknoten.

Eine erste bevorzugte Ausgestaltung der Erfindung besteht darin, daß vor Verfahrensschritt b) die Datennetzverbindungen durch Relaiskontakte am Ausgang aller Netzknoten unterbrochen werden, jeder Netzknoten nach erfolgter Adresszuteilung die Netzverbindung zu dem ihm nachfolgenden Netzknoten wiederherstellt und die Aktivierung der Netzknoten unmittelbar über die Datennetzleitung erfolgt.

Eine erste Weiterbildung dieser Ausgestaltung sieht dabei vor, daß zur Aktivierung des ersten Netzknotens in Schritt I. ein Gleichspannungsimpuls, dessen Spannung über der normalen Datennetzspannung liegt, auf das Netz gegeben wird und im ersten und allen weiteren Netzknoten nach erfolgter Adresszuteilung ein ebensolcher Gleichspannungsimpuls erzeugt wird, der unmittelbar vor der Wiederherstellung der Netzverbindung zum nächsten Netzknoten an diesen weitergegeben wird (Schritt II.).

Eine alternative Weiterbildung der ersten Ausgestaltung der Erfindung sieht hingegen vor, daß die Datennetzleitungen bei der Unterbrechung auf eine Aktivierungsschaltung geschaltet werden, in Schritt I. ein Spannungssignal auf das Netz gegeben wird, das den ersten Netzknoten aktiviert und dieser und jeder darauffolgende Netzknoten nach seiner Adresszuteilung die Datennetzleitung zum nachfolgenden Netzknoten durchschaltet und somit das für die Dauer des Verfahrens anliegende Spannungssignal diesen aktiviert.

Beiden Verfahrensalternativen ist der Vorteil gemein, daß sie in einem herkömmlichen Zweileitungsnetz durchgeführt werden können.
Eine zweite bevorzugte Ausgestaltung der Erfindung sieht vor, daß zur Übertragung von Aktivierungssignalen eine Zusatzleitung verlegt wird, die vor Verfahrensschritt I. durch Relaiskontakte an den Ausgängen der Netzknoten unterbrochen wird und nach erfolgter Adresszuteilung der jeweilige Netzknoten die Verbindung zum nachfolgenden Netzknoten wieder herstellt und so das Aktivierungssignal weiterleitet.

Der Vorteil dieser Ausgestaltung liegt darin, daß während der Konfigurierung die Datennetzleitungen zwischen den Knoten nicht unterbrochen werden und somit globale Steuerbefehle des Zentralrechners, wie z. B. das Einschalten aller Lichter im Haus oder das Hochfahren aller Jalousien, nach wie vor ausführbar sind.

Die Aufgabe der Erfindung besteht weiterhin darin, die zum Durchführen der oben genannten, erfindungsgemäßen Verfahren notwendigen Vorrichtungen zu schaffen, da in bisher bekannten Vorrichtungen die Netzknoten lediglich über jeweils eine mittels eines Kopplers an die Datennetzleitungen angeschlossene Steuerelektronik verfügen. Diese Steuerelektronik ist vor und während der Adressvergabe nicht individuell ansteuerbar, da in einem Informationsdatennetz normalerweise mehrere baugleiche Netzknoten vorhanden sind.

Zur Durchführung des Verfahrens nach Anspruch 1 ist daher erfindungsgemäß vorgesehen, daß die Netzknoten von den Schaltelektroniken betätigbare Relaiskontakte aufweisen, mit denen die ein Aktivierungssignal zur Aktivierung der einzelnen Netzknoten führenden Leitungen unterbrechbar sind und die Aktivierung der jeweiligen Netzknoten durch Auslösen einer Aktivierungsschaltung, die über einen ihr zugeordneten Schaltkoppler mit der Steuerelektronik verbunden ist, durch den vor ihm liegenden Netzknoten durchführbar ist.

Zur Durchführung des Verfahrens nach Anspruch 3 ist erfindungsgemäß vorgesehen, daß die Relaiskontakte der einzelnen Netzknoten jeweils den Datennetzausgang zum nachfolgenden Netzknoten wahlweise mit dem Datennetzeingängen oder mit einer Hilfsspannungsquelle verbinden, die durch die Steuerelektronik steuerbar ist, und daß die Aktivierungsschaltung durch oberhalb der normalen Datennetzspannung liegende Gleichspannungssignale, z. B. über eine Zenerdiode, aktivierbar ist.

Zur Durchführung des Verfahrens nach Anspruch 4 ist erfindungsgemäß vorgesehen, daß die Relaiskontakte der einzelnen Netzknoten wahlweise den Datennetzausgang oder die Aktivierungsschaltung mit dem Datennetzeingang verbindet.

In bevorzugter Ausgestaltung dieser beiden erfindungsgemäßen Vorrichtungen ist vorgesehen, daß die Aktivierungsschaltung jeweils über einen Gleichrichter mit dem Datennetz gekoppelt ist.

Dies hat den Vorteil, daß beim Anschließen der Netzknoten an das Datennetz nicht auf eine bestimmte Polarisation der Anschlußklemmen geachtet werden muß.

Zur Durchführung des Verfahrens nach Anspruch 5 ist erfindungsgemäß vorgesehen, daß die Vorrichtung eine Zusatzleitung zur Übertragung des Aktivierungssignals besitzt, die in jedem Netzknoten durch den Relaiskontakt unterbrechbar ist.

Weiterhin besitzen alle Netzknoten der erfindungsgemäßen Vorrichtungen vorzugsweise eine Lerntaste zum manuellen Auslösen des Adressierungsvorgangs.

Auf die zur Konfiguration des Netzes nun eigentlich nicht mehr notwendige Lerntaste wird nicht verzichtet, weil es aufgrund von Programmierfehlern oder Gerätedefekten notwendig sein kann, manuell in das Verfahren einzugreifen. Erleichtert wird dieser Eingriff dadurch, daß die Störstelle am Rechner zu ersehen ist. So ist es außerdem bei einem späteren Austausch einzelner Netzknoten nicht erforderlich, das Verfahren für die Konfiguration für alle Netzknoten neu durchzuführen.

In weiterer bevorzugter Ausgestaltung der Erfindung ist vorgesehen, daß die Netzknoten über eine Steuerelektronik verfügen, die sowohl als Aktorteil zur Ansteuerung elektrischer Verbraucher als auch als Sensorteil zum Empfang von Meßsignalen dienen kann.

Mit einem solchen Netzknoten lassen sich elektrische Einrichtungen vor Ort datennetzunabhängig steuern, was insbesondere vor und während der Konfigurierung, bei der die Datennetzleitungen unterbrochen sein können, von Vorteil ist.

Im folgenden wird anhand der beigefügten Zeichnungen näher auf zwei Ausführungsbeispiele der Erfindung eingegangen. Es zeigen:
- Fig. 1: ein Informationsdatennetz mit Netzknoten in Ausgangsstellung;
- Fig. 2: das Informationsdatennetz nach Fig. 1 während der Konfigurierung des ersten Netzknotens;
- Fig. 3: das Informationsdatennetz nach Fig. 1 nach der Adressvergabe an den ersten und während der Konfigurierung des zweiten Netzknotens;
- Fig. 4: eine alternative Ausführungsform eines Informationsdatennetzes.

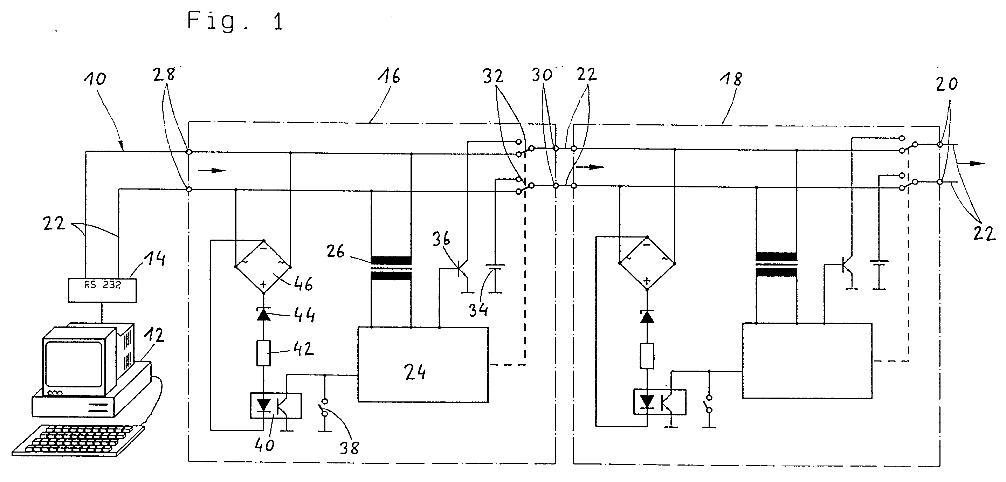

Fig. 1 zeigt ein Informationsdatennetz 10 mit einem Zentralrechner 12, einer Schnittstelle 14, einem ersten Netzknoten 16, einem zweiten Netzknoten 18 und einem Anschluß 20, der mit einer Vielzahl weiterer Netzknoten (nicht gezeigt) verbunden ist, die hintereinander zu einem Zweileitungsbussystem 22 gekoppelt sind.

Alle Netzknoten, die in einem Bussystem auch als Busknoten bezeichnet werden können, besitzen einen vom Prinzip her gleichen Aufbau, so daß die Beschreibung des ersten Netzknotens 16 stellvertretend auch für alle anderen Netzknoten gültig ist.

Der Netzknoten 16 besitzt eine Steuerelektronik 24, die über einen Koppler 26 direkt mit einem Eingang 28 für den Zweileitungsbus 22 verbunden ist. Die Steuerelektronik 24 besitzt Ausgänge (nicht gezeigt) zur Ansteuerung elektrischer Verbraucher, z. B. Beleuchtung oder Sonnenschutz, und/oder Eingänge (ebenfalls nicht gezeigt) zum Empfang von Schalt- oder Meßsignalen.

Der Netzknoten 16 verfügt über Ausgänge 30 zum Anschluß des zweiten Netzknotens 18. Diese Ausgänge 30 werden von einem Relaiskontakt 32, der von der Steuerelektronik 24 betätigbar ist, wahlweise mit den Eingängen 28 oder mit einer Hilfsspannungsquelle 34 verbunden, wobei die Hilfsspannungsquelle 34 von der Steuerelektronik 24 über einen Transistor 36 steuerbar ist. Weiterhin weist die Steuerelektronik 24 eine manuell zu betätigende Lerntaste 38 auf. Parallel zu dieser Lerntaste 38 ist ein optoelektronischer Schalter 40 - im folgenden Optokoppler genannt - angeordnet, der über einen Widerstand 42, eine Zenerdiode 44 und einen Gleichrichter 46 mit den Eingängen 28 des Zweileitungsbussystems 22 verbunden ist.

Fig. 1 zeigt das Bussystem 22 mit in Ausgangsstellung befindlichen Netzknoten 16, 18, wobei der Relaiskontakt 32 in jedem Netzknoten die Eingänge 28 mit den Ausgängen 30 für das Zweileitungsbussystem 22 verbindet. Der Informationsaustausch zwischen der Steuerelektronik 24 der einzelnen Netzknoten 16, 18 und dem Zentralrechner 12 erfolgt über die Schnittstelle 14 in Form von Bustelegrammen. Um die an den einzelnen Netzknoten angeschlossenen elektrischen Verbraucher unabhängig voneinander zu steuern, ist es notwendig, den einzelnen Steuerelektroniken Adressen zuzuordnen, an die man die einzelnen Bustelegramme richten kann. Vor dieser Adresszuteilung ist ein Absenden von Bustelegrammen an bestimmte Netzknoten nicht möglich, es ist lediglich vorgesehen, mit globalen, an alle Netzknoten gleichen Typs gerichteten Steuerbefehlen beispielsweise das Licht im ganzen Haus auszuschalten oder sämtliche Sonnenschutzeinrichtungen hochzufahren.

Um den Steuerelektroniken der einzelnen Netzknoten individuelle Adressen zuzuteilen, kann man mit Hilfe der Lerntaste 38 wie bisher verfahren. Dabei betätigt eine Person diese Lerntaste 38, woraufhin die Steuerelektronik 24 ein Bustelegramm mit einer Knotenkennung an den Rechner 12 schickt, dort eine zweite Person, die mit der ersten im Sprechkontakt steht, die Adresse des Netzknotens 16 eingibt und der Rechner 12 diese Adresse an die Steuerelektronik 24 vergibt, indem er ein Bustelegramm abschickt, welches an die vorher empfangene Knotenkennung gerichtet ist. Der Netzknoten 16 ist unter dieser Adresse nun individuell ansteuerbar. Diese Prozedur muß nacheinander für alle Netzknoten des Informationsdatennetzes 10 durchgeführt werden.

Mit den oben beschriebenen Netzknoten ist jedoch ein einfacheres Verfahren zur Konfiguration des Informationsdatennetzes 10 möglich. Dabei ist vorgesehen, daß jeder Netzknoten nach der Zuteilung seiner Adresse die Konfigurierung des ihm nachfolgenden Netzknotens auslöst. Im einzelnen werden dabei folgende Verfahrensschritte durchgeführt:

In Fig. 1 ist die Ausgangsstellung des Informationsdatennetzes 10 gezeigt, dessen Netzknoten in Reihe geschaltet sind, wobei die Relaiskontakte 32 die Eingänge 28 mit den Ausgängen 30 verbinden. Im ersten Verfahrensschritt gibt man die Adressbezeichnungen entsprechend der in Reihe gekoppelten Netzknoten in den Rechner 12 ein. Diese Reihenfolge der Netzknoten kann z. B. aus einem vorher festgelegten Leitungsschemaplan bekannt sein, nach dem auch die Netzknoten verdrahtet wurden.

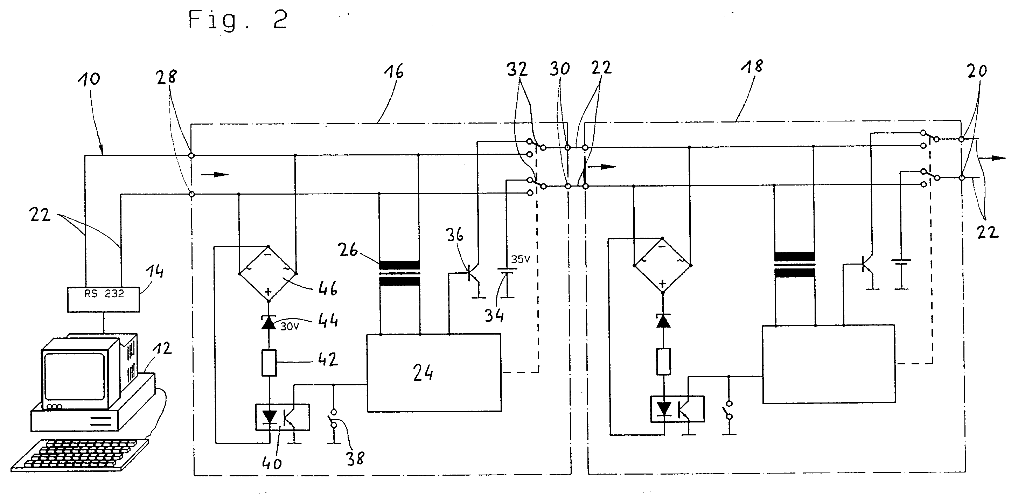

Daraufhin startet man am Rechner 12 ein Konfigurierungsprogramm, das zunächst an alle Netzknoten ein Bustelegramm absendet, welches bewirkt, daß die Steuerelektroniken in allen Netzknoten den Relaiskontakt 32 auf die Hilfsspannungsquelle 34 umschalten. Es ergibt sich der in Fig. 2 gezeigte Schaltungszustand, bei dem das Zweileitungsbussystem 22 zwischen allen Netzknoten unterbrochen ist.

Im nächsten Schritt wird in der Schnittstelle 14 ein Gleichspannungsimpuls auf die Busleitung 22 gegeben. Da die Spannung dieses Impulses im Gegensatz zur Spannung beim Abschikken von Bustelegrammen oberhalb der Schaltspannung der Zenerdiode 44 liegt, wird über den Optokoppler 40 der Lernkontakt betätigt. Der Gleichrichter 46 gewährleistet unabhängig von der Polung der Eingänge 28 ein Auslösen des Optokopplers.

Das Schaltsignal des Optokopplers 40 veranlaßt die Steuerelektronik 24, über den Koppler 6 eine Knotenkennung an den Zentralrechner 12 zu melden. Die Knotenkennung wird herstellerseitig in der Steuerelektronik 24 hinterlegt und hat lediglich die Funktion, daß der Zentralrechner 12 gezielt mit dem aktivierten Netzknoten 16 kommunizieren kann. Sie enthält keine Informationen über Art, Lage oder Funktion des betreffenden Netzknotens, zumal diese bei der Herstellung noch nicht bekannt sind. Der Zentralrechner vergibt daraufhin dem ersten Netzknoten 16 die erste Adressbezeichnung der hinterlegten Reihenfolge und sendet diese Adressbezeichnungen über die Busleitung 22 und den Koppler 26 zur Steuerelektronik 24. Der Empfang dieser Adressbezeichnungen veranlaßt die Steuerelektronik 24 über den Transistor 36, die Hilfsspannungsquelle 34 auf die Ausgänge 30 zu schalten. Das hierbei erzeugte Gleichspannungssignal besitzt das gleiche Format des oben erwähnten Gleichspannungssignals, das die Schnittstelle 14 an den ersten Netzknoten 16 gesendet hat und besitzt die Eigenschaft des Aktivierungssignals für die nächsten Netzknoten.

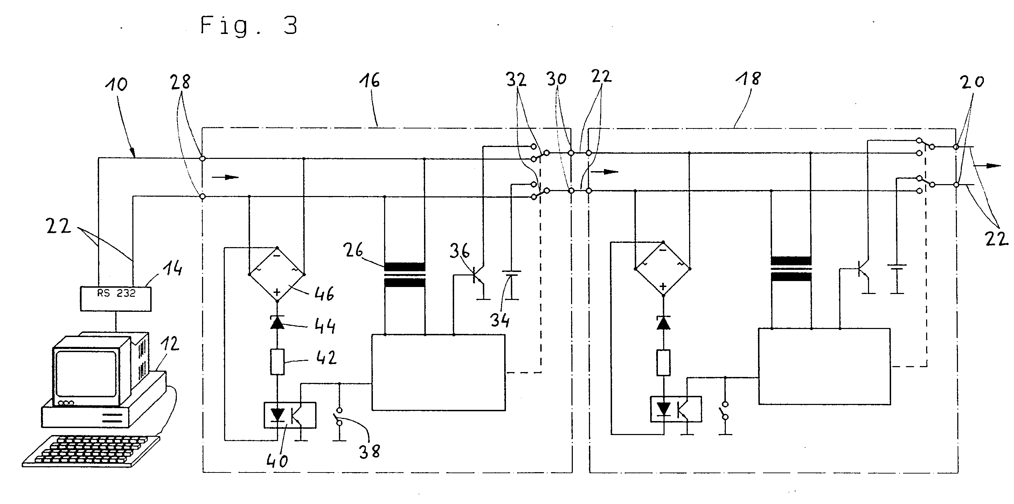

Unmittelbar nach Erzeugen des Gleichspannungsimpulses schaltet die Steuerelektronik 24 den Relaiskontakt 32 wieder in seine Ausgangsstellung zurück, in der er die Eingänge 28 mit den Ausgängen 30 verbindet, wie dies in Fig. 3 gezeigt ist. Nun kann der zweite Netzknoten 18 mit dem Rechner 12 in Verbindung treten und konfiguriert werden, wobei ihm die zweite Adressbezeichnung der hinterlegten Reihenfolge zugeordnet wird.

In gleicher Weise werden alle weiteren Netzknoten konfiguriert. Der Rechner 12 erkennt nach Vergabe der letzten Adressbezeichnung, daß die Konfigurierung des Bussystems abgeschlossen ist.

Da dieses Verfahren vom Rechner aus voll automatisch gesteuert wird, ergibt sich ein beträchtlicher Zeitgewinn gegenüber dem manuellen Betätigen aller Lerntasten in den einzelnen Netzknoten.

In einer Abwandlung dieses Bussystems ist der Relaiskontakt am Ausgang des Netzknotens so geschaltet, daß er den Buseingang wahlweise mit dem Busausgang oder unmittelbar mit dem Gleichrichter der Aktivierungsschaltung verbindet. Mit dieser Anordnung kann das Aktivierungssignal schrittweise von Netzknoten zu Netzknoten weitergeschaltet werden.

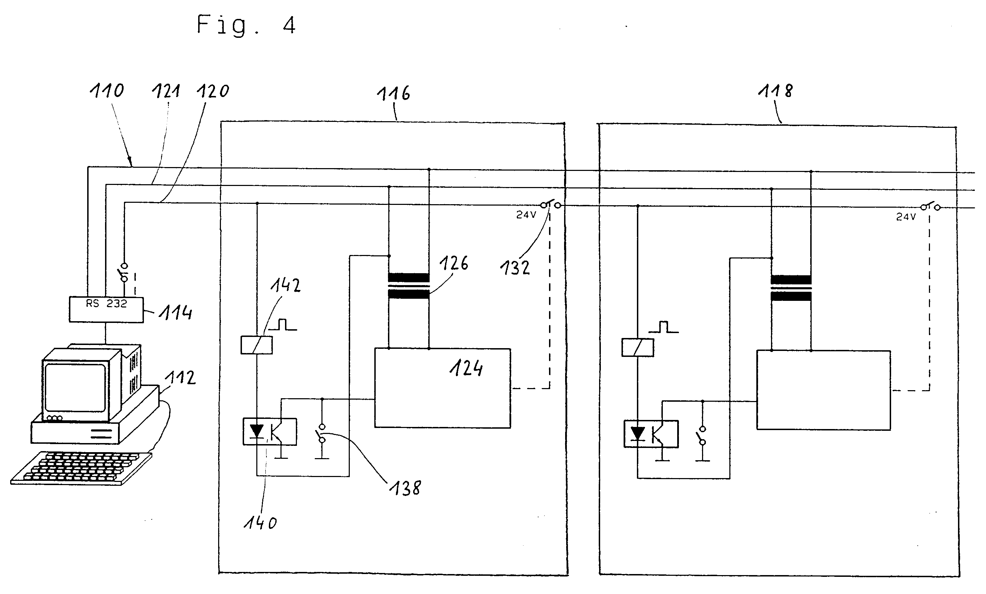

Als alternative Ausführungsmöglichkeit ist in Fig. 4 ein Bussystem 110 dargestellt. Im Unterschied zur vorher beschriebenen Ausführung sind der Zentralrechner 112 und die Schnittstelle 114 über ein Dreileitungssystem mit einem ersten Netzknoten 116, einem zweiten Netzknoten 118 und einer Vielzahl weiterer, nicht gezeigter Netzknoten verbunden.

Auch bei diesem Bussystem 110 besitzt jeder Netzknoten eine Steuerelektronik 124, die über einen Koppler 126 mit den zwei Leitungen verbunden ist, über die die Bustelegramme geschickt werden. Jeder Netzknoten weist an seinem Ausgang einen Relaiskontakt 132 auf, der, von der Steuerelektronik betätigbar, eine dritte Datennetzleitung 120 unterbrechen kann. Auch in dieser Ausführungsform weist jeder Netzknoten eine Lerntaste 138 auf, zu der ein Optokoppler 140 parallel geschaltet ist, der über ein Monoflopschaltelement 142 an die Zusatzleitung 120 und an eine der beiden Datennetzleitungen 121 gekoppelt ist.

Für das Konfigurationsverfahren ergibt sich eine ähnliche Schrittfolge wie bei der zuerst beschriebenen Ausführungsform.

Zunächst werden die zukünftigen Adressbezeichnungen entsprechend der Reihenfolge der Netzknoten im Rechner gespeichert. Über den Rechner veranlaßt man nun, daß alle Steuerelektroniken die Relaiskontake 132 in allen Netzknoten öffnen. Darauf wird zwischen der Zusatzleitung 120 und der vorher gewählten Leitung des Datennetzes ein konstantes Gleichspannungssignal angelegt. Wegen des Monoflopschaltelements 142 wird der Optokoppler 140 nur impulsartig betätigt. Der Konfigurierungsprozess des ersten Netzknotens 116 wird durchgeführt, und nach seinem Abschluß schaltet die Steuerelektronik 124 den Relaiskontakt 132 wieder so, daß das Gleichspannungssignal am Optokoppler des zweiten Netzknotens 118 anliegt. Dieser Prozeß wird so bis zum letzten Netzknoten fortgesetzt.

Da bei diesem Verfahren die eigentlichen Busleitungen nicht unterbrochen werden, ist es denkbar, auch während des Konfigurationsverfahrens globale Steuerbefehle abzusenden, so daß man beispielsweise bei plötzlich aufkommendem Wind außenliegende Sonnenschutzeinrichtungen einfahren kann.

Die Steuerelektroniken aller hier beschriebenen Netzknoten sind so ausgelegt, daß sie bei lokalem Anschluß eines Schalters und eines elektrischen Verbrauchers zur Steuerung von diesem auch unabhängig vom Bussystem 22, 110 verwendet werden können. So ist man bereits vor der Konfigurierung des Bussystem 22, 110 in der Lage, in einzelnen Räumen das Licht einzuschalten oder den Sonnenschutz herabzulassen.

## Patentansprüche

1. Verfahren zur Konfiguration eines Informationsdatennetzes (10; 110) in Form eines Bussystems zur Steuerung elektrischer Einrichtungen in Gebäuden mit einem Zentralrechner (12; 112), einer Schnittstelle (14; 114) und einer Vielzahl von Netzknoten (16, 18; 116, 118) mit einer Steuerelektronik (24; 124) zur Ansteuerung elektrischer Verbraucher oder zum Empfang von Meßsignalen, wobei die Netzknoten in festgelegter Reihenfolge hintereinander gekoppelt werden, **gekennzeichnet durch** folgende Verfahrensschritte:
a) vor Beginn der Konfiguration werden die Adressbezeichnungen entsprechend den in Reihe gekoppelten Netzknoten (16, 18; 116, 118) für die Adressvergabe im Rechner (12; 112) hinterlegt;
b) die Netzknoten (16, 18; 116, 118) werden in ihrer Reihenfolge einzeln nacheinander in der Weise aktiviert, daß sie dem Rechner eine vorhandene Knotenkennung mitteilen, wobei
I. der erste Netzknoten (16; 116) direkt vom Rechner (12; 112) aus aktiviert wird und ihm die erste Adressbezeichnung der hinterlegten Reihenfolge zugeteilt wird;
II. jeder Netzknoten nach seiner Adresszuteilung den hinter ihn geschalteten Netzknoten zur Mitteilung seiner Knotenkennung an den Rechner aktiviert und ihm daraufhin die jeweils nächste Adressbezeichnung der hinterlegten Reihenfolge zugeteilt wird.

2. Verfahren nach Anspruch 1, **dadurch gekennzeichnet**, daß vor Verfahrensschritt b) die Datennetzverbindungen (22) durch Relaiskontakte (32) am Ausgang (30) aller Netzknoten (16, 18; 116, 118) unterbrochen werden und jeder Netzknoten nach erfolgter Adresszuteilung die Datennetzverbindung zu dem ihm nachfolgenden Netzknoten wieder herstellt und die Aktivierung der Netzknoten in Schritt b) unmittelbar über die Datennetzleitung erfolgt.

3. Verfahren nach Anspruch 2, **dadurch gekennzeichnet**, daß zur Aktivierung des ersten Netzknotens (16) in Schritt I. ein Gleichspannungsimpuls, dessen Spannung über der normalen Datennetzspannung liegt, auf das Netz gegeben wird und im ersten (16) und allen weiteren Netzknoten (18) nach erfolgter Adresszuteilung ein ebensolcher Gleichspannungsimpuls erzeugt wird, der vor der Wiederherstellung der Netzverbindung zum nächsten Netzknoten an diesen weitergegeben wird.

4. Verfahren nach Anspruch 2, **dadurch gekennzeichnet**, daß die Datennetzleitungen bei der Unterbrechung auf eine Aktivierungsschaltung geschaltet werden, in Schritt I, ein Spannungssignal auf das Netz gegeben wird, das den ersten Netzknoten aktiviert und dieser und jeder darauffolgende Netzknoten nach seiner Adresszuteilung die Datennetzleitung zum nachfolgenden Netzknoten durchschaltet und somit das für die Dauer des Verfahrens anliegende Spannungssignal diesen aktiviert.

5. Verfahren nach Anspruch 1, **dadurch gekennzeichnet**, daß zur Übertragung von Aktivierungssignalen eine Zusatzleitung (120) verlegt wird, die vor Verfahrensschritt I. durch Relaiskontakte (132) an den Ausgängen der Netzknoten (116, 118) unterbrochen wird und nach erfolgter Adresszuteilung der jeweilige Netzknoten die Verbindung zum nachfolgenden wiederherstellt und so das Aktivierungssignal weiterleitet.

6. Vorrichtung zur Durchführung des Verfahrens nach Anspruch 1, mit einem Zentralrechner (12; 112), einer Schnittstelle (14; 114) und einer Vielzahl von Netzknoten (16, 18; 116, 118), die über wenigstens zwei Datennetzleitungen (22) in festgelegter Reihenfolge hintereinander gekoppelt sind und jeweils über einen Koppler (26; 126) an die Datennetzleitungen (22) angeschlossene Schaltelektroniken (24; 124) besitzen, **dadurch gekennzeichnet**, daß die Netzknoten (16, 18; 116, 118) von den Schaltelektroniken (24; 124) betätigbare Relaiskontakte (32; 132) aufweisen, mit denen die ein Aktivierungssignal zur Aktivierung der einzelnen Netzknoten führenden Leitungen (22; 120) unterbrechbar sind und die Aktivierung der jeweiligen Netzknoten durch Auslösen einer Aktivierungsschaltung, die über einen Schaltkoppler (40; 140) mit der Steuerelektronik (24; 124) verbunden ist, durch den vor ihm liegenden Netzknoten durchführbar ist.

7. Vorrichtung nach Anspruch 6 zur Durchführung des Verfahrens nach Anspruch 3, **dadurch gekennzeichnet**, daß die Relaiskontakte (32) der einzelnen Netzknoten (16, 18) jeweils den Datennetzausgang (30) zum nachfolgenden Netzknoten wahlweise mit dem Datennetzeingang (28) oder mit einer Hilfsspannungsquelle (34) verbinden, die durch die Steuerelektronik (24) steuerbar ist und daß die Aktivierungsschaltung durch oberhalb der normalen Datennetzspannung liegende Gleichspannungssignale, z. B. über eine Zenerdiode (44), aktivierbar ist.

8. Vorrichtung nach Anspruch 6 zur Durchführung des Verfahrens nach Anspruch 4, **dadurch gekennzeichnet**, daß die Relaiskontakte der einzelnen Netzknoten wahlweise den Datennetzausgang oder die Aktivierungsschaltung mit dem Datennetzeingang verbinden.

9. Vorrichtung nach Anspruch 7 oder 8, **dadurch gekennzeichnet**, daß die Aktivierungsschaltung über einen Gleichrichter (46) mit den Datennetzleitungen (22) verbunden ist.

10. Vorrichtung nach Anspruch 6 zur Durchführung des Verfahrens nach Anspruch 5, **dadurch gekennzeichnet**, daß sie eine Zusatzleitung (120) zur Übertragung des Aktivierungssignals besitzt, die in jedem Netzknoten (116, 118) durch den Relaiskontakt (132) unterbrechbar ist.

11. Vorrichtung nach einem der Ansprüche 6 bis 10, **dadurch gekennzeichnet**, daß sie eine Lerntaste (38; 138) zum manuellen Auslösen des Adressierungsvorgangs aufweist.

12. Vorrichtung nach einem der Ansprüche 6 bis 11, **dadurch gekennzeichnet**, daß die Steuerelektronik (24; 124) sowohl einen Aktorteil zur Ansteuerung elektrischer Verbraucher als auch einen Sensorteil zum Empfang von Meßsignalen aufweist.
